# EUROPEAN PATENT SPECIFICATION

(11) **EP 1 123 860 B1**
(45) Date of publication and mention of the grant of the patent: **02.04.2008**
(21) Application number: 01103234.9
(22) Date of filing: 12.02.2001
(51) Int. Cl.: B62J 39/00, B62J 6/20

(54) **Apparatus for mounting a signal element to a bicycle wheel**
Vorrichtung zum Einbau eines Signalelements an einem Fahrradrad
Dispositif pour le montage d'élément de signal à la roue d'une bicyclette

(30) Priority: 11.02.2000 US 502957; 01.03.2000 US 516654
(43) Date of publication of application: 16.08.2001
(73) Proprietor: SHIMANO INC., Osaka 590-8577 (JP)
(72) Inventor: Fujii, Kazuhiro, Kawachinagano-shi, Osaka (JP); Uno, Kouji, Osaka-shi, Osaka (JP)
(74) Representative: Grosse, Wolfgang

(56) References cited:
- EP-A- 0 432 475
- GB-A- 2 246 625
- US-A- 3 854 777
- US-A- 4 787 014

## Description

### CROSS REFERENCE TO RELATED APPLICATION

This application is a continuation-in-part of copending Application Number 09/502,957, filed February 11, 2000, entitled Apparatus for Mounting a Signal Element to a Bicycle Wheel.

### BACKGROUND OF THE INVENTION

The present invention is directed to control devices for bicycle transmissions and, more particularly, to an apparatus for mounting a signal element to a bicycle wheel, wherein the signal element is used to select a processing mode for a computer controlled bicycle transmission. Document GB 2 246 625 A shows an apparatus for mounting a signal element to a bicycle wheel according to the preamble of claim 1.

Computers are sometimes used to control bicycle transmissions. A typical computer controlled bicycle transmission has a processor that receives wheel speed and/or pedal crank speed signals and shifts the bicycle transmission based on these input signals to maintain the wheel and/or pedal crank speed at a desired value. Sometimes it is desirable to shift the bicycle transmission at different speeds depending on the type of terrain over which the bicycle is ridden. To accomplish this, the computer is designed to allow the rider to select different algorithms or speed tables (processing modes) to process the input data based on the expected riding conditions.

One way the rider may select the different processing modes for the computer is by pressing a button or moving a switch on the computer control console. Another method used to select the processing modes is disclosed in U.S. Patent Application Number 09/471,668, filed December 24, 1999 and entitled Method and Apparatus for Selecting a Processing Mode for a Bicycle Computer. In the specific embodiment disclosed in that patent application, a plurality of magnetic sensors are mounted to the bicycle frame in close proximity to the rear wheel of the bicycle. One or more magnets are mounted to the spokes of the wheel such that, when the wheel revolves, the one or more magnets activate one or more of the magnetic sensors, and the processing mode of the computer is selected based on which sensors are activated. The processing mode then may be changed by moving the one or more magnets to a different position on the spoke.

While the use of magnets to change the processing mode of the computer eliminates the need for buttons or switches on the computer control console, the user must manually loosen the magnet assembly from the spoke, move the magnet assembly to a different position on the spoke, and then tighten the magnet assembly at the new position. Not only does this require substantial effort, but inexperienced users may have difficulty placing the magnet in the proper position. Thus, it is desirable to have a structure that eliminates much of the effort and guess work when changing the magnet position.

### SUMMARY OF THE INVENTION

These objects are achieved by an apparatus according to claim 1. Preferred embodiments are defined in the dependent claims.

The present invention is directed to an apparatus for mounting a signal element to a bicycle wheel such that the signal element may be reliably moved to a different position with less effort than known methods. An apparatus for mounting a signal element to a bicycle wheel includes a base member for mounting to the wheel and a movable member coupled to the base member for movement relative to the base member, wherein the movable member includes a signal element mounting location. If desired, a positioning mechanism may be provided for positioning the movable member relative to the base member, wherein the positioning mechanism sets the movable member in one of a plurality of predetermined positions relative to the base member.

In a more specific embodiment, a plate-shaped retainer may be provided for coupling the movable member to the base member, wherein the movable member is disposed between the retainer and the base member and rotates relative to the base member. In this case the signal element mounting location is offset from a rotational axis of the movable member. The positioning mechanism may include a positioning groove disposed on one of the base member and the movable member and a positioning projection disposed on the other one of the base member and the movable member for engaging the positioning groove. If desired, the movable member may include a grasping projection to facilitate rotation of the movable member.

In another embodiment, the base member includes a mounting opening, and the movable member extends through the mounting opening. In this embodiment, the movable member may be rotatably disposed in the mounting opening. As with the previous embodiment, the positioning mechanism may include a positioning groove disposed on one of the base member and the movable member and a positioning projection disposed on the other one of the base member and the movable member for engaging the positioning groove. Also, the movable member may include a grasping projection to facilitate rotation of the movable member. If the movable member is an annular member, then the grasping projection can extend radially inwardly from an inner peripheral surface of the annular member.

In either of the above embodiments a reflector may be mounted on one or both sides of the base member or the mounting member. As a result, the apparatus can be mounted to the wheel spokes and also serve as a safety reflector when the bicycle is ridden at night.

In another embodiment of the present invention, the moving member may comprise a mounting arm pivotably coupled to the base member through a pivot shaft, wherein the signal element mounting location is radially spaced apart from the pivot shaft. If the mounting arm is capable of pivoting by at least 180°, then a first latch can extend from a first side of the mounting arm and a second latch can extend from an opposite second side of the mounting arm. Thus, when the base member is mounted to a wheel spoke, the mounting arm can be placed in one predetermined location by latching the first latch to the spoke. Thereafter, the mounting arm can be rotated 180° and latched to the spoke with the second latch.

In another embodiment of the present invention, the base member includes a movable member mounting boss and a spoke mounting protuberance coupled to the movable member mounting boss. If desired, the spoke mounting protuberance may extend from a side wall of the movable member mounting boss, wherein the spoke mounting protuberance includes a protuberance slot for receiving a spoke therein. In a more specific embodiment, the movable member mounting boss includes a tubular member having a side wall defining a side wall opening extending through the side wall and communicating with the protuberance slot. If the movable member is adapted to be fitted within the tubular member, then the movable member may includes a plurality of positioning grooves on an outer peripheral surface thereof. Thus, when the apparatus is mounted to a spoke, the spoke may extend into the side wall opening and function as a positioning member for positioning the movable member relative to the base member.

If desired, the spoke mounting protuberance may include a threaded inner peripheral surface, and a mounting screw may engage the threaded inner peripheral surface for mounting the apparatus to the spoke. A support ring may be provided to surround the spoke mounting protrusion and prevent the spoke mounting protrusion from spreading when the mounting screw is engaged with the spoke mounting protrusion. Alternatively, a spoke pressing member may be provided, wherein the spoke pressing member is adapted to be fitted within the protuberance slot. In this case, the spoke mounting protuberance may include a threaded outer peripheral surface, and a nut may be provided for causing the spoke pressing member to move toward the side wall opening and press against the spoke.

### BRIEF DESCRIPTION OF THE DRAWINGS

Fig. 1 is a side view of a bicycle that incorporates a particular embodiment of an apparatus according to the present invention for mounting a signal element to the bicycle wheel;
Fig. 2 is an exploded view of a first embodiment of an apparatus according to the present invention for mounting the signal element to the bicycle wheel;
Fig. 3 is a top view of the apparatus in an assembled state;
Fig. 4 is a front view of the apparatus showing the signal element in a first position;
Fig. 5 is a front view of the apparatus showing the signal element in a second position;
Fig. 6 is an oblique view of a second embodiment of an apparatus according to the present invention for mounting the signal element to the bicycle wheel;
Fig. 7 is an exploded view of the apparatus shown in Fig. 6;
Fig. 8 is an oblique view of a third embodiment of an apparatus according to the present invention for mounting the signal element to the bicycle wheel;
Fig. 9 is an exploded view of the apparatus shown in Fig. 8;
Fig. 10 is an exploded view of a fourth embodiment of an apparatus according to the present invention for mounting the signal element to the bicycle wheel;
Fig. 11 is a top cut away view of the apparatus shown in Fig. 10;
Fig. 12 is a front cross sectional view of the apparatus shown in Fig. 10;
Fig. 13 is an oblique view of the apparatus shown in Fig. 10 mounted to a spoke;
Fig. 14 is an exploded view of a fifth embodiment of an apparatus according to the present invention for mounting the signal element to the bicycle wheel; and
Fig. 15 is a top cut away view of the apparatus shown in Fig. 10.

### DETAILED DESCRIPTION OF THE EMBODIMENTS

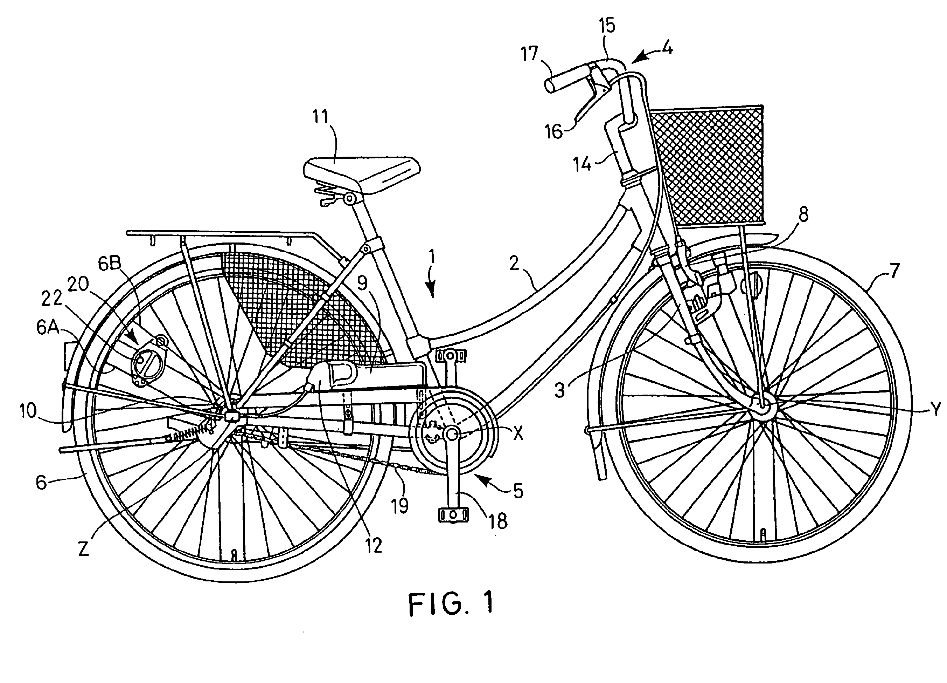

Fig. 1 is a side view of a bicycle that includes a particular embodiment of an apparatus 20 according to the present invention for mounting a signal element, which is a magnet 22, to a bicycle wheel. The bicycle includes a frame 1 with a double-loop type of frame body 2 and a front fork 3; a handle component 4; a drive component 5 for rotation around an axis X; a front wheel 7 for rotation around an axis Y; a rear wheel 6 in which a three-speed internal shifting hub 10 is mounted for rotation around an axis Z; front and rear brake devices 8 (only the front brake device is shown in figure); a shift control element 9 for conveniently operating the internal shifting hub 10; and a saddle 11. The handle component 4 has a handle stem 14 that is fixed to the upper portion of the front fork 3 and a handlebar 15 that is fixed to the handle stem 14. Brake levers 16 and grips 17 which constitute part of the brake devices 8 are mounted at either end of the handlebar 15. The drive component 5 has a pedal crank 18 that is provided to the lower portion (bottom bracket portion) of the frame body 2, a chain 19 that is wrapped around the pedal crank 18, and the internal gear hub 10.

Shift control element 9 may be a computer controlled shift control element constructed according to the teachings of U.S. Patent Application Number 09/471,668, filed December 24, 1999 and entitled Method and Apparatus for Selecting a Processing Mode for a Bicycle Computer. Shift control element 9 includes a sensor unit 12 that outputs signals by detecting magnet 22 mounted on apparatus 20 which, in turn, is mounted to spokes 6A and 6B of the rear wheel 6.

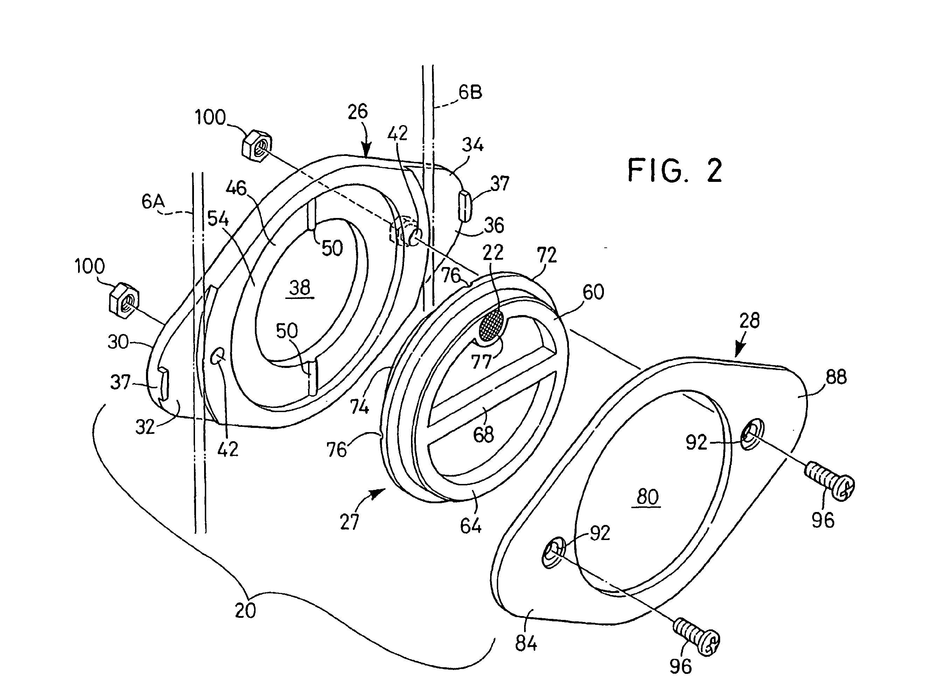

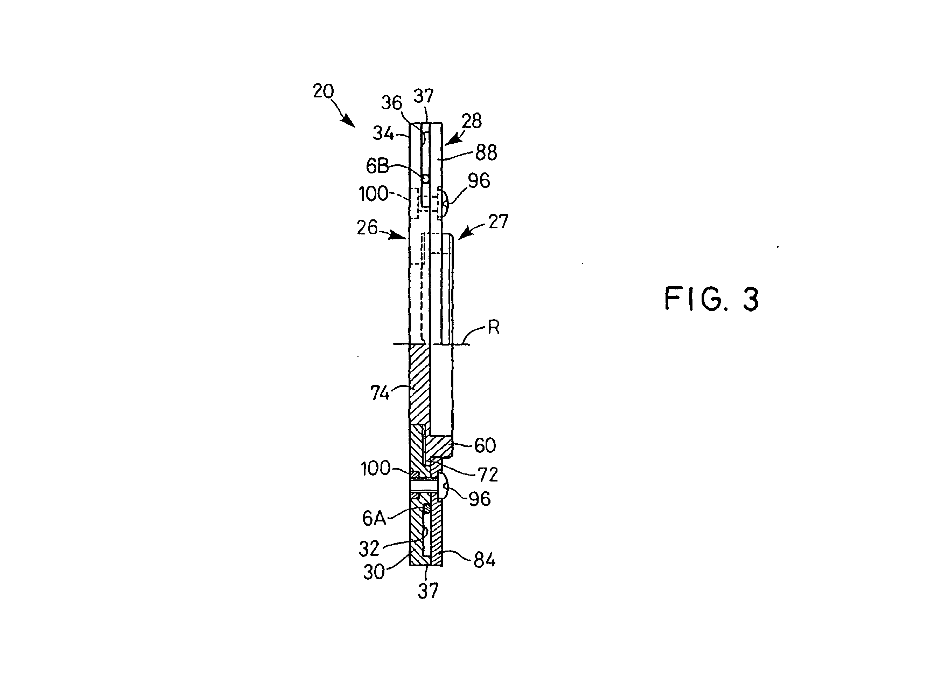

Fig. 2 is an exploded view of apparatus 20, and Fig. 3 is a top view of apparatus 20 in an assembled condition. Apparatus 20 includes a base member 26, a movable member 27, and a retainer 28. Base member 26 includes a first spoke mounting portion 30 with a spoke mounting groove or recess 32 for mounting to spoke 6A, a second spoke mounting portion 34 with a spoke mounting groove or recess 36 for mounting to spoke 6B, side stops 37 for limiting rotation and translation of base member 26 relative to spokes 6A and 6B, a circular central opening 38, base member mounting openings 42, and a circular movable member mounting recess 46 concentric with central mounting opening 38. Diametrically opposed and radially extending elongated positioning projections 50 are formed on a surface 54 of mounting recess 46.

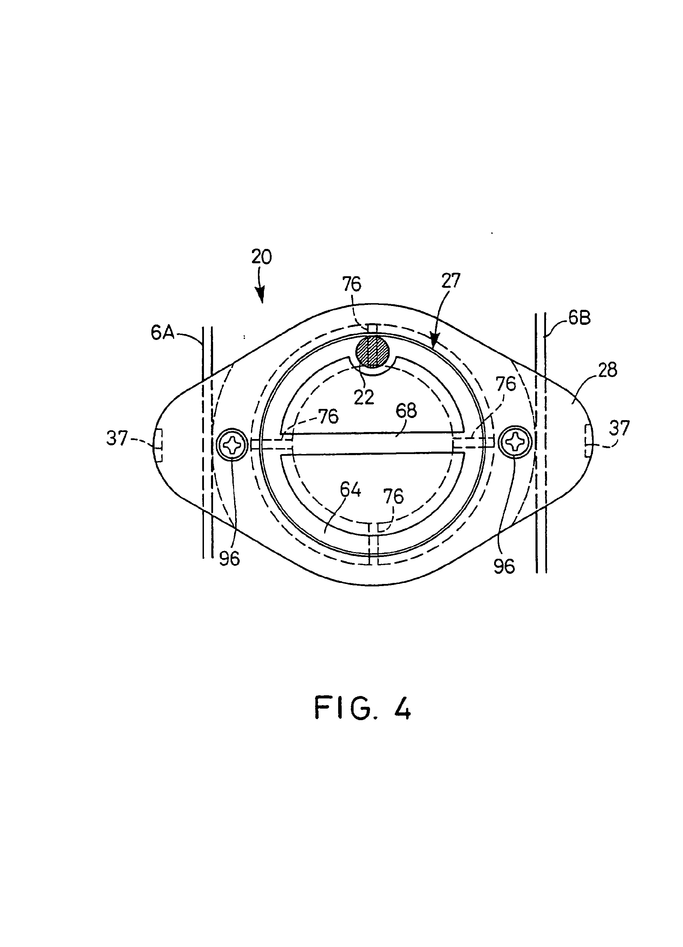

Movable member 27 includes a circular magnet mounting member 60 having a circular annular magnet mounting rim 64, a grasping projection 68 extending across the diameter of magnet mounting rim 64, a circular mounting flange 72 extending radially outwardly from magnet mounting rim 64, and a circular guide projection 74 extending from the rear of magnet mounting member 60. In this embodiment, mounting flange 72 includes four diametrically opposed and radially extending positioning grooves 76 (only two such grooves are shown in Fig. 2), wherein the positioning grooves 76 are located 90 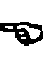 from each other as shown in Fig. 4. Magnet 22 is fitted within a magnet mounting recess 77 formed in magnet mounting rim 64 so that magnet 22 is radially offset from the rotational axis R (Fig. 3) of movable member 27.

Retainer 28 is a plate-shaped member that includes a circular central opening 80 sized to fit around magnet mounting rim 64, diametrically opposed base member mounting portions 84 and 88, and retainer mounting openings 92.
Apparatus 20 is assembled by placing base member 26 against spokes 6A and 6B so that spokes 6A and 6B are located within spoke mounting recesses 32 and 36, respectively. Then, guide projection 74 of movable member 27 is placed in mounting opening 38 of base member 26 such that one pair of positioning grooves on mounting flange 72 engage positioning projections 50 on base member 26. Thereafter, retainer 28 is placed over movable member 27 so that magnet mounting rim 64 is fitted within opening 80, movable member 27 is sandwiched between base member 26 and retainer 28, and retainer mounting openings 92 align with base member mounting openings 42. Finally, mounting screws 96 are placed through retainer mounting openings 92 and base member mounting openings 42, and retainer 28 is fastened to base member 26 by tightening nuts 100 on screws 96.

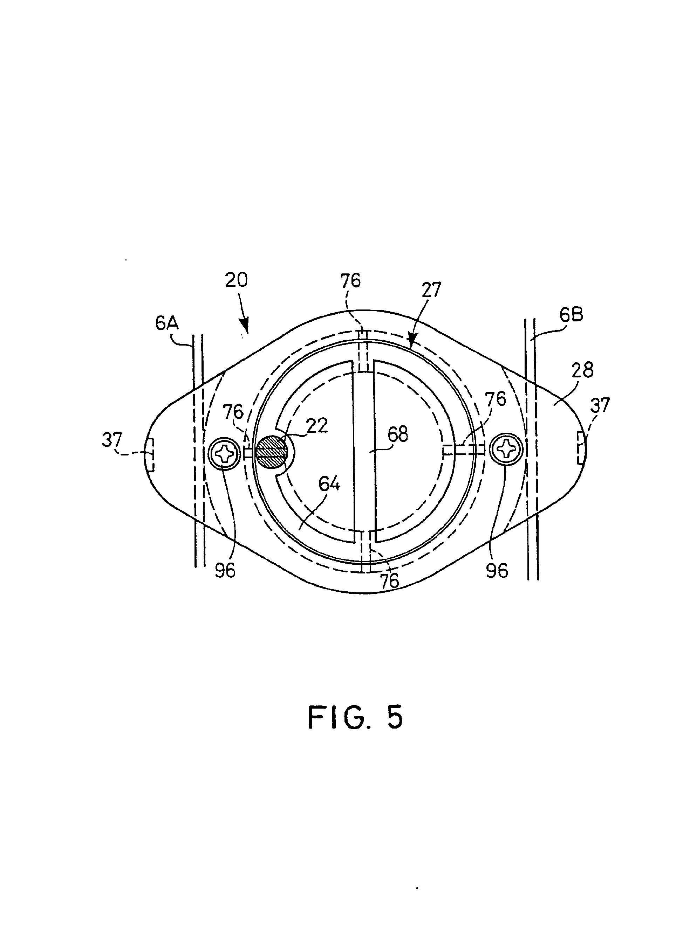

Fig. 4 is a front view of apparatus 20 showing magnet 22 in a first position, which corresponds to the exploded view shown in Fig. 2. During initial assembly, if magnet 22 is not placed in the proper position, then base member can be translated or rotated relative to spokes 6A and 6B by loosening screws 96 and nuts 100 to set magnet 22 in the proper initial position. Thereafter, to change the position of magnet 22 to select a different processing mode for shift control device 9, screws 96 are loosened until retainer 28 separates from base member 26 enough that positioning grooves 76 can be disengaged from positioning projections 50. Thereafter, movable member 27 can be rotated 90 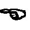 with the help of grasping projection 68 until the other pair of positioning grooves 76 engage positioning projections 50, and retainer 28 is again fastened to base member 26 by tightening screws 96 and nuts 100. Of course, if retainer 28 is made from a sufficiently resilient material, then movable member 27 may be rotated relative to base member 26 without loosening screws 96 and nuts 100, in which case positioning grooves 76 and positioning projections 50 functions as simple detents. In any case, the new position is then as shown in Fig. 5. As a result, the radial position of magnet 22 relative to the rotational axis Z of rear wheel 6 can be changed in a simple and reliable way.

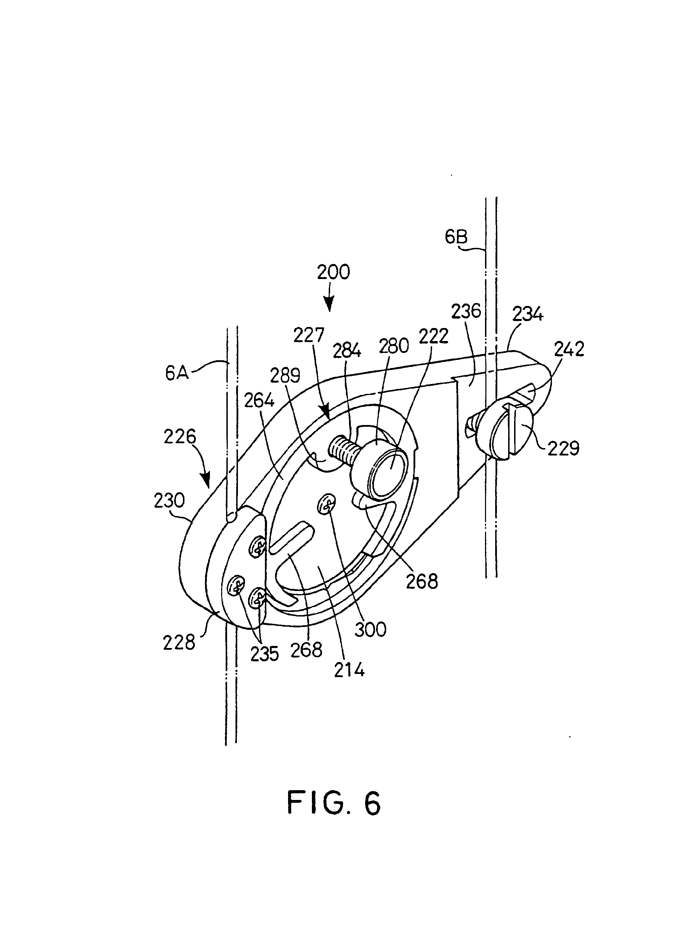

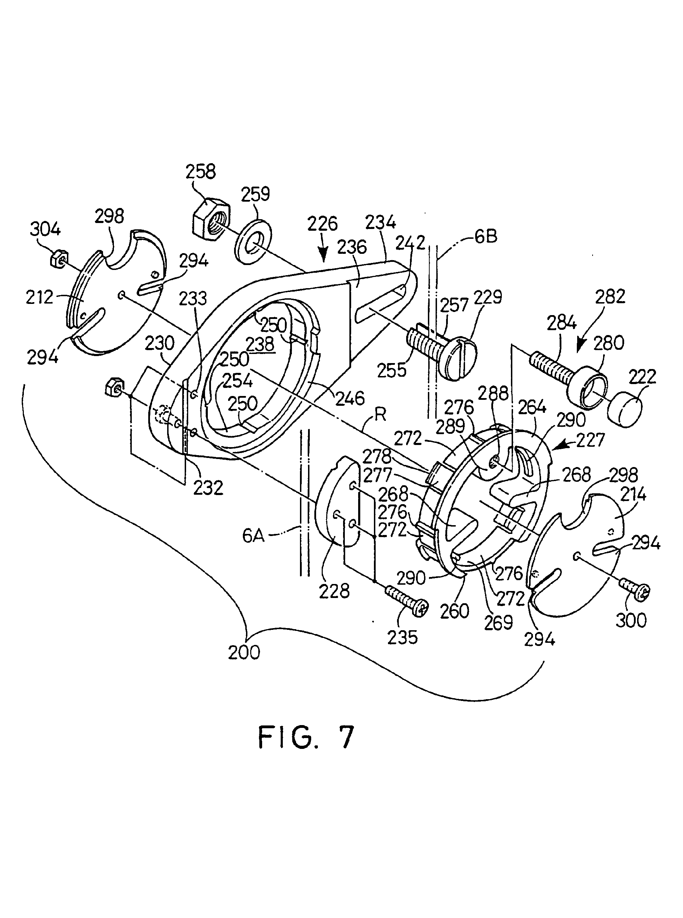

Fig. 6 is an oblique view of an apparatus 200 representing a second embodiment of the present invention for mounting a signal element, which is a magnet 222, to the bicycle wheel, and Fig. 7 is an exploded view of apparatus 200. In this embodiment, apparatus 200 includes a base member 226, a movable member 227, a retaining plate 228, a retaining bolt 229, and light reflectors 212 and 214. Base member 226 includes a first spoke mounting portion 230 with a thin spoke mounting groove 232 that has the same general shape as spoke 6A and three threaded mounting holes 233 for engaging screws 235 used to fasten retaining plate 228, a second spoke mounting portion 234 with a spoke mounting groove or recess 236 and elongated slot 242 for mounting to spoke 6B, a circular central mounting opening 238, and a circular movable member mounting recess 246 concentric with mounting opening 238. Four diametrically opposed and axially extending elongated positioning grooves 250 are formed on the inner peripheral surface 254 of mounting opening 238.

Retaining bolt 229 has a threaded shank 255 with a slot 257 that allows shank 255 to straddle spoke 6B. Thus, second spoke mounting portion 234 may be mounted to spoke 6B by positioning spoke 6B within slot 257, extending shank 255 through slot 242 and placing a nut 258 and washer 259 on shank 255 at the rear of second spoke mounting portion 234. Slot 242 extends at least partially in a direction perpendicular to spoke mounting groove 232. This configuration allows base member 226 to be adjusted radially relative to rotational axis Z of rear wheel 6, since the circumferential distance between the spokes increases as base member 226 moves radially outwardly.

In this embodiment, movable member 227 includes a circular annular magnet mounting member 260 having a circular annular mounting flange 264, grasping projections 268 extending radially inwardly from an inner peripheral surface 269, four diametrically opposed mounting projections 272 extending from the rear of magnet mounting member 260, and four diametrically opposed locking tabs 277. In this embodiment, the four mounting projections 272 include four diametrically opposed and axially extending positioning projections 276 for engaging positioning grooves 250. Also, each locking tab 277 has a radially outwardly extending portions 278 for engaging the rear of base member 226 to thereby retain movable member 227 to base member 226.

Magnet 222 is fitted within a head 280 of a magnet mounting bolt 282 having a threaded shank 284 that screws into a threaded opening 288 of a magnet mounting boss 289 that protrudes radially inwardly from the inner peripheral surface 269 of movable member 227 so that magnet 222 is radially offset from the rotational axis R (Fig. 7) of movable member 227. This structure allows the axial position of magnet 222 to be easily adjusted merely by turning magnet mounting bolt 282.

Light reflectors 212 and 214 are provided to serve as safety reflectors when the bicycle is ridden at night. Each reflector 212 and 214 has a diameter that allows the reflectors to be fitted within movable member 227 and rest against abutments 290 formed on the inner peripheral surface 269 of movable member 227. Each reflector 212 and 214 has elongated slots 294 for receiving grasping projections 268 therethrough and a semicircular concavity 298 for receiving magnet mounting boss 289 therethrough. Reflectors 212 and 214 are fixed together by a screw 300 and nut 304.

To assemble apparatus 200, movable member 227 is mounted in base member 226 by slightly pressing locking tabs 277 radially inwardly and pressing movable member 227 through mounting opening 238 until locking tabs 277 and mounting projections 272 extend through mounting opening 238, radially outwardly extending portions 278 of locking tabs 277 engage the rear of base member 226, and mounting flange 264 is seated within recess 246. Reflectors 212 and 214 then are inserted into movable member 227 until they rest against abutments 290 and are fastened using screw 300 and nut 304. Thereafter, base member 226 is placed against spokes 6A and 6B so that spoke 6A is seated in spoke mounting groove 232. Retaining plate 228 is fastened to first spoke mounting portion 230 with screws 235, spoke 6B is inserted into slot 257 in bolt 229 so that bolt 229 extends through second spoke mounting portion 234, and second spoke mounting portion 234 is fastened to spoke 6B by nut 258 and washer 259.

Because of the resiliency of mounting projections 272 and locking tabs 277 in the radial direction, movable member 227 may be rotated using grasping projections 268 until a pair of the positioning projections 276 on movable member 227 engage the positioning grooves 250 in base member 226 to set magnet 222 in the desired position. The rotational position of magnet 222 relative to base member 226 can be changed simply by rotating movable member 227 so that another pair of positioning projections 276 engages positioning grooves 250 without disassembling apparatus 200.

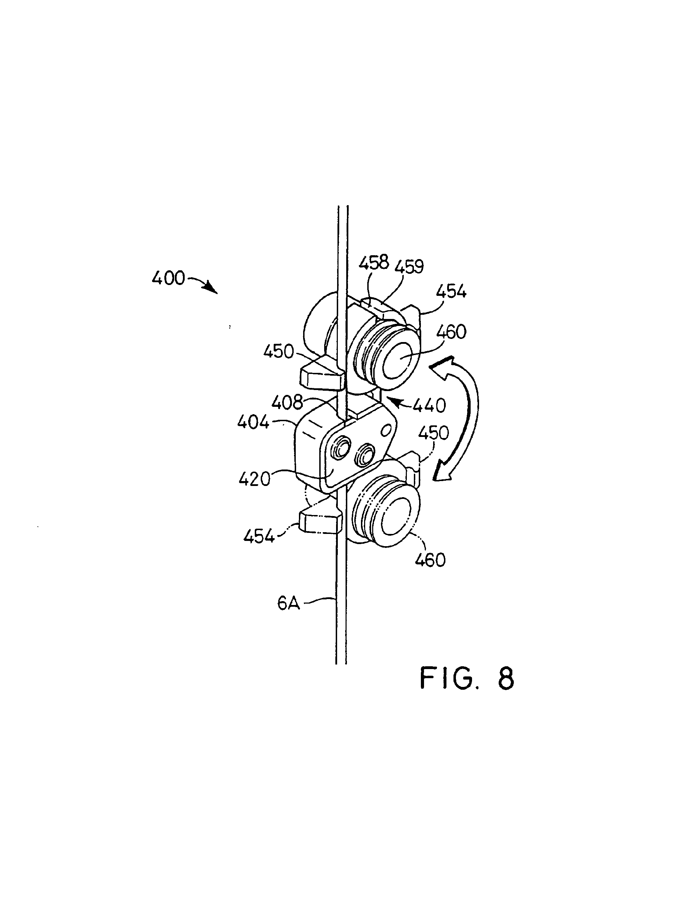

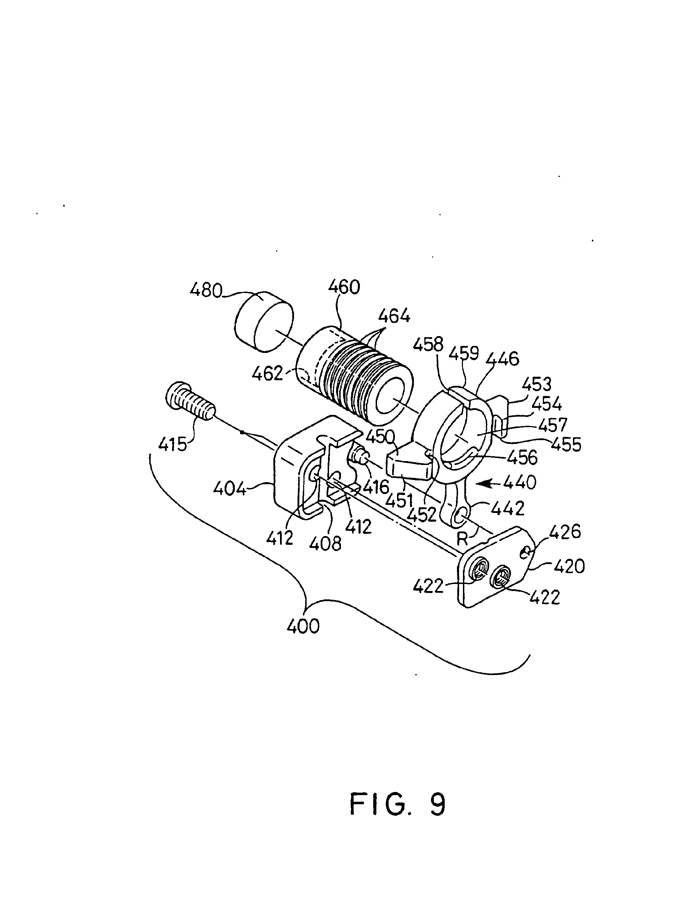

Fig. 8 is an oblique view of an apparatus 400 representing a third embodiment of the present invention for mounting a signal element to the bicycle wheel, and Fig. 9 is an exploded view of apparatus 400. Apparatus 400 includes a base member 404, a retaining plate 420, a movable member in the form of a magnet mounting arm 440, a magnet holder 460 and a magnet 480. Base member 404 includes a spoke mounting groove 408 for engaging spoke 6A, two openings 412 on opposite sides of spoke mounting groove 408 for receiving mounting screws 415 therethrough, and a pivot shaft 416 for pivotably mounting magnet mounting arm 440. Retaining plate 420 includes threaded openings 422 for engaging mounting screws 415, and a pivot shaft opening 426 for receiving pivot shaft 416 therein.

Magnet mounting arm 440 has an annular base member mounting boss 442 on a first end thereof for pivotably mounting magnet mounting arm 440 to pivot shaft 416, and a magnet mounting boss 446 on a second end thereof for supporting magnet holder 460 so that magnet 480 is radially offset from the rotational axis R (Fig. 9) of magnet mounting arm 440. A first latch 450 with a first cam surface 451 and a first latching surface 452 extends from a first side of magnet mounting boss 446 for latching magnet mounting arm 440 to spoke 6A in the position shown by solid lines in Fig. 8. Similarly, a second latch 453 having a second cam surface 454 and a second latching surface 455 extends from an opposite second side of magnet mounting boss 446 for latching magnet mounting arm 440 to spoke 6A in the position shown by broken lines in Fig. 8. A magnet positioning projection 456 extends radially inwardly from an inner peripheral surface 457 of magnet mounting boss 446, and a slot 458 extends completely through a side wall 459 of magnet mounting boss 446 to provide radial resiliency to magnet mounting boss for reasons discussed below.

Magnet holder 460 is a generally cylindrically-shaped member having a magnet mounting cavity 462 for mounting magnet 480 and a plurality of magnet positioning grooves 464 formed circumferentially around the outer peripheral surface thereof. One of the plurality of magnet positioning grooves 464 engages magnet positioning projection 456 to set the axial position of magnet holder 460 and thereby set the axial position of magnet 480.

Apparatus 400 is assembled by placing base member 404 against spoke 6A so that spoke 6A is engaged in spoke mounting groove 408. At the same time, base member mounting boss 442 of magnet mounting arm 440 is placed around pivot shaft 416. Thereafter, retaining plate 420 is fastened to base member 404 by aligning threaded openings 422 with openings 412, inserting pivot shaft 416 into pivot shaft opening 426, extending mounting screws 415 through openings 412, and screwing mounting screws 415 into threaded openings 422. In this manner, base member 404 is attached to spoke 6A, and magnet mounting arm 440 is pivotably retained to base member 404 through pivot shaft 416. Magnet holder 460, with magnet 480 secured therein, is inserted into magnet mounting boss 446 until a desired positioning groove 464 engages positioning projection 456 to set the desired axial position of magnet 480. The insertion of magnet holder 460 into magnet mounting boss 446 is facilitated by slot 458 which provides radial resiliency to magnet mounting boss 446.

Finally, magnet mounting arm 440 is rotated around pivot shaft 416 and latched in either the position shown by solid lines in Fig. 8 or the position shown by broken lines in Fig. 8. Latch 450 is sufficiently resilient that magnet mounting boss 446 may be latched to spoke 6A in the position shown by solid lines in Fig. 8 simply by rotating magnet mounting arm 440 until first cam surface 451 presses against spoke 6A. Further rotation of magnet mounting arm 440 causes latch 450 to bend away from spoke 6A until spoke 6A rides over the crest of first cam surface 451 and engages first latching surface 452.

To change the position of magnet mounting arm 440, the user presses against first cam surface 451 to bend first latch 450 backward and disengage spoke 6A from first latching surface 452. Then magnet mounting arm 440 is rotated 180 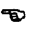 until second cam surface 454 of second latch 453 presses against spoke 6A. Further rotation of magnet mounting arm 440 causes second latch 453 to bend away from spoke 6A until spoke 6A rides over the crest of second cam surface 454 and engages second latching surface 455. Second latch 453 is disengaged from spoke 6A by similarly pressing against second cam surface 454 to bend second latch 453 backward.

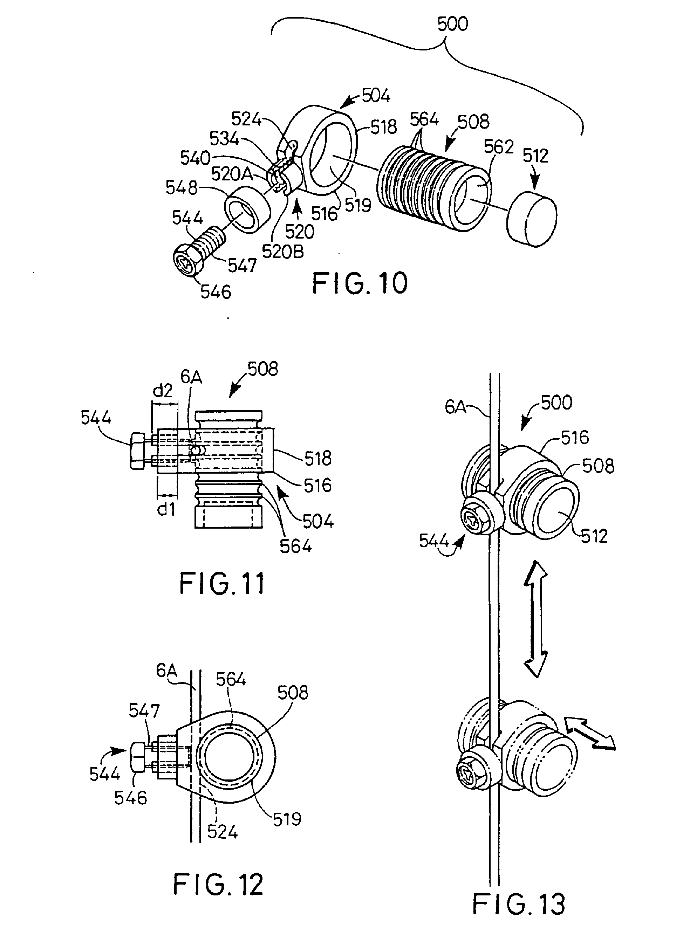

Fig. 10 is an exploded view of an apparatus 500 representing a fourth embodiment of the present invention for mounting the signal element to the bicycle wheel, Fig. 11 is a top cut away view of apparatus 500, and Fig. 12 is a front cross sectional view of apparatus 500. Apparatus 500 includes a base member 504, a movable member in the form of a magnet holder 508, and a magnet 512. Base member 504 includes a tubular movable member mounting boss 516 having a side wall 518 defining a central opening 519, wherein a spoke mounting protuberance 520 extends from side wall 518. In this embodiment, a side wall opening in the form of a side wall slot 524 extends through side wall 518 in a circumferential direction so that, when base member 504 is mounted to spoke 6A as shown in Fig. 12, spoke 6A extends slightly into central opening 519 for reasons discussed below.

Spoke mounting protuberance 520 includes a protuberance slot 534 extending completely through spoke mounting protuberance 520 for receiving spoke 6A therein. Protuberance slot 534 thus splits spoke mounting protuberance 520 into two protuberance sections 520A and 520B, and protuberance slot 534 communicates with and is oriented in the same direction as side wall slot 524. In this embodiment, side wall slot 524 is sufficiently deep that spoke 6A is fitted entirely within side wall slot 524, and no part of spoke 6A extends into protuberance slot 534 so that spoke 6A does not tend to spread protuberance sections 520A and 520B apart. Of course, in other embodiments spoke 6A may be allowed to extend into protuberance slot 534.

In this embodiment, spoke mounting protuberance 520 includes a threaded inner peripheral surface 540 for threadingly engaging a mounting screw 544 having a head 546 and a threaded shank 547. Head 546 of mounting screw 544 may have a multi-sided (e.g., hexagonal) outer peripheral surface and/or a multi-sided (e.g., hexagonal) inner peripheral surface for engaging a tool. A support ring 548 is provided for surrounding spoke mounting protrusion 520 to prevent unwanted spreading of protuberance sections 520A and 520B when mounting screw 544 is screwed into spoke mounting protuberance 520. As shown in Fig. 11, a length d1 of support ring 548 preferably is less than a length d2 of spoke mounting protuberance 520, although in other embodiments this relationship could change. Also, shank 547 of mounting screw 544 has a sufficient length that head 544 does not contact either spoke mounting protuberance 520 or support ring 548 to ensure that the free end of mounting screw 544 will reliably press against spoke 6A as shown in Figs. 11 and 12.

As in the third embodiment, magnet holder 508 is a generally cylindrically-shaped member having a magnet mounting cavity 562 for mounting magnet 512 and a plurality of magnet positioning grooves 564 formed circumferentially (either parallel or in a spiral manner) around the outer peripheral surface thereof. Magnet holder 508 is adapted to be fitted within central opening 519 of movable member mounting boss 516, and one of the plurality of magnet positioning grooves 564 engages the portion of spoke 6A extending into central opening 519 as shown in Fig. 12 to set the axial position of magnet holder 508 and thereby set the axial position of magnet 512.

Apparatus 500 is assembled by placing base member 504 against spoke 6A so that spoke 6A is seated within side wall slot 524 and magnet holder 508 is in the desired position relative to movable member mounting boss 516. Thereafter, support ring 548 is placed over spoke mounting protuberance 520, and mounting screw 544 is screwed into spoke mounting protuberance 520 until the free end of shank 547 presses against spoke 6A. During this precess, apparatus 500 may be moved along spoke 6A as shown in Fig. 13, and the position of magnet holder 508 relative to movable member mounting boss 516 may be adjusted as desired.

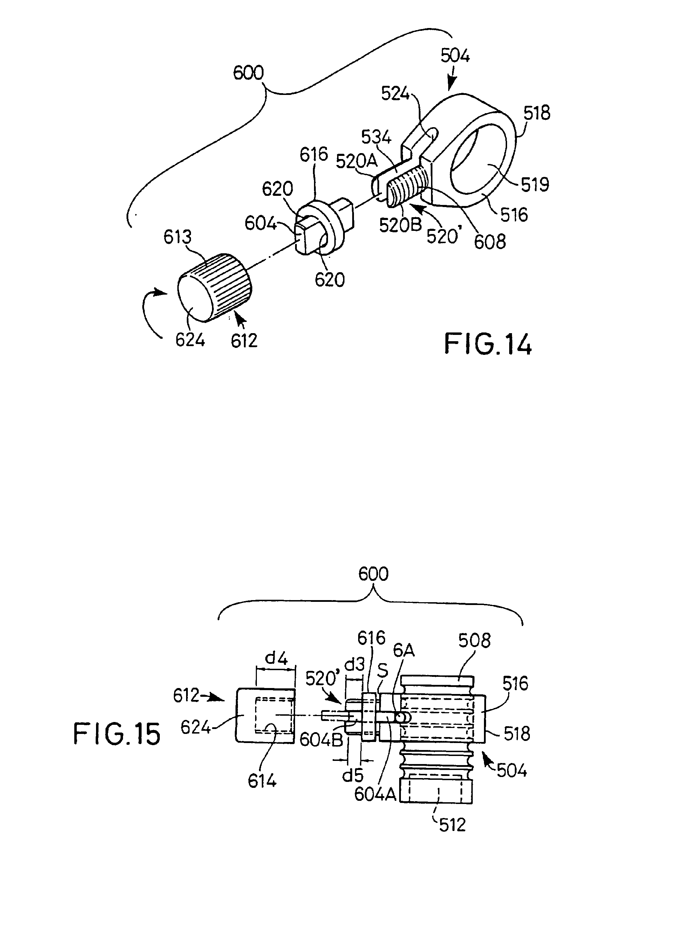

Fig. 14 is an exploded view of an apparatus 600 representing a fifth embodiment of the present invention for mounting the signal element to the bicycle wheel, and Fig. 15 is a top cut away view of apparatus 600. This embodiment is similar to the fourth embodiment shown in Figs. 10-15, so the identical components are numbered the same.

In this embodiment, a plate-shaped spoke pressing member 604 is adapted to be fitted within protuberance slot 534, a spoke mounting protuberance 520' includes a threaded outer peripheral surface 608, and a nut 612 with a knurled outer peripheral surface 613 and a threaded inner peripheral surface 614 is provided for causing spoke pressing member 604 to be moved toward side wall slot 524 for pressing against spoke 6A. A support ring 616 surrounds spoke pressing member 604 and is coupled for movement with spoke pressing member 604. For example, support ring 616 may be bonded to spoke pressing member 604 or may be formed as one piece with spoke pressing member 604. As a result, support ring 616 forms two holes 620 for receiving protuberance sections 520A and 520B therethrough.

To ensure reliable engagement of spoke 6A, the length of a portion 604A of spoke pressing member 604 is set so that there will be a space S between support ring 616 and side wall 518 of movable member mounting boss 516. Also, a length d3 of an exposed portion of spoke mounting protuberance 520' is less than a length d4 of the threaded inner peripheral surface 614 of nut 612, and a length d5 of a portion 604B of spoke pressing member 604 is set so that portion 604B does not protrude from spoke mounting protuberance 520' to ensure that nut 612 will press against support ring 616. Alternatively, if nut 612 includes a side wall 624 as shown in Figs. 14 and 15, then length d5 of portion 604B of spoke pressing member 604 can be set to protrude from spoke mounting protuberance 520' as shown by the broken lines in Fig. 15 so that side wall 624 presses against the end of portion 604B and thereby causes portion 604A of spoke pressing member 604 to press against spoke 6A.

Apparatus 600 is assembled by placing base member 504 against spoke 6A so that spoke 6A is seated within side wall slot 524 and magnet holder 508 is in the desired position relative to movable member mounting boss 516. Thereafter, spoke pressing member 604 is placed within protuberance slot 534 so that protuberance sections 520A and 520B extend through holes 620 and support ring 616 surrounds spoke mounting protuberance 520'. Nut 612 then is screwed onto spoke mounting protuberance 520' until either nut 612 presses against support ring 616 or side wall 624 of nut 612 presses against the free end of portion 604B, depending upon the embodiment, so that portion 604A of spoke pressing member 604 presses against spoke 6A. During this precess, apparatus 600 may be moved along spoke 6A in the same manner as in the fourth embodiment shown in Fig. 13, and the position of magnet holder 508 relative to movable member mounting boss 516 may be adjusted accordingly.

While the above is a description of various embodiments of the present invention, further modifications may be employed without departing from the scope of the present invention. For example, the size, shape, location or orientation of the various components may be changed as desired. The functions of one element may be performed by two, and vice versa. It is not necessary for all advantages to be present in a particular embodiment at the same time.

Thus, the scope of the invention should not be limited by the specific structures disclosed or the apparent initial focus on a particular structure or feature, but should only be limited by the claims.

## Claims

1. An apparatus for mounting a signal element (22; 222; 480; 512) to a bicycle wheel (6), comprising:
the signal element (22; 222; 480; 512),
a base member (26; 226; 404; 504) for mounting to the wheel (6),
a movable member (27; 227; 440; 508) coupled to the base member (26; 226; 404; 504) for movement relative to the base member (26; 226; 404; 504), wherein the movable member (27; 227; 440; 508) includes a signal element mounting member (60; 289; 446; 562) for mounting the signal element (22; 222; 480; 512) to the movable member (27; 227; 440; 508),
**characterized in that** the signal element (22; 222; 480; 512) is a magnet.

2. The apparatus according to claim 1 wherein the base member (26; 226) includes a first spoke mounting portion (30; 230) for mounting to a first spoke (6A).

3. The apparatus according to claim 2 wherein the first spoke mounting portion (30; 230) includes a spoke mounting groove (32; 232) for receiving the first spoke (6A) therein.

4. The apparatus according to claim 2 wherein the first spoke mounting portion (32; 232) includes an elongated slot.

5. The apparatus according to claim 2 wherein the base member (226) includes a second spoke mounting portion (234) for mounting to a second spoke (6B), wherein the first spoke mounting portion (230) includes a spoke mounting groove (232) for receiving the first spoke (6A) therein; and wherein the second spoke mounting portion (234) includes an elongated slot (242).

6. The apparatus according to claim 5 wherein the elongated slot (242) extends at least partially in a direction perpendicular to the spoke mounting groove (232).

7. The apparatus according to one of the preceding claims wherein the movable member (27; 227; 440) is coupled for rotation relative to the base member (26; 226; 404).

8. The apparatus according to claim 7 wherein one of the base member (26; 226) and the movable member ( 27; 227) includes a positioning groove (76; 250), and wherein the other one of the base member (26; 226) and the movable member (27; 227) includes a positioning projection (50; 276) for engaging the positioning groove (76; 250) for setting the movable member (27; 227) in a predetermined position relative to the base member (26; 226).

9. The apparatus according to claim 7 or 8 wherein the base member (26; 226) includes a mounting opening (38; 238), and wherein the movable member (27; 227) is rotatably mounted in the mounting opening (38; 238).

10. The apparatus according to claim 9 wherein the mounting opening (38; 238) has a substantially circular shape.

11. The apparatus according to one of the preceding claims wherein the signal element mounting location (60; 289; 446) is offset from a rotational axis (R) of the movable member (27; 227; 440).

12. The apparatus according to one of the preceding claims wherein the movable member (27; 227) includes a grasping projection (68; 268).

13. The apparatus according to one of the preceding claims further comprising a retainer (28) for coupling the movable member (27) to the base member (26).

14. The apparatus according to claim 13 wherein the movable member (27) is disposed between the retainer (28) and the base member (26).

15. The apparatus according to claim 13 or 14 wherein the retainer (28) is a plate-shaped member.

16. The apparatus according to one of the claims 13 to 15 wherein the retainer (28) has a retainer opening (80) for exposing a portion of the movable member (27).

17. The apparatus according to claim 16 in connection with claim 12 wherein the grasping projection (68) is disposed in the retainer opening (80).

18. The apparatus according to claim 16 or 17 wherein the retainer opening (80) has a circular shape, and wherein the movable member (27) has a circular shape that rotates in the retainer opening (80).

19. The apparatus according to one of the preceding claims further comprising a first reflector (212) coupled to a first side of the movable member (227).

20. The apparatus according to claim 19 further comprising a second reflector (214) coupled to an opposite second side of the movable member (227).

21. The apparatus according to one of the preceding claims wherein the base member (26; 226) includes a mounting opening (38; 238), and wherein the movable member (27; 227) is disposed in the mounting opening (38; 238).

22. The apparatus according to claim 21 wherein the movable member (26; 226) extends through the mounting opening (38; 238).

23. The apparatus according to one of the preceding claims wherein the movable member (27; 227) comprises an annular member (64; 264).

24. The apparatus according to claim 23 in connection with claim 12 wherein the grasping projection (68; 268) extends from an inner peripheral surface of the annular member (64; 264).

25. The apparatus according to one of claims 21 to 24 wherein the movable member (227) includes a retaining member (277) for retaining the movable member (227) in the mounting opening (238).

26. The apparatus according to one of the preceding claims further comprising a positioning mechanism for positioning the movable member (27; 227; 440) relative to the base member (26; 226; 404).

27. The apparatus according to claim 26 wherein the positioning mechanism sets the movable member (27; 227; 440) in one of a predetermined plurality of positions relative to the base member (26; 226; 440).

28. The apparatus according to claim 26 or 27 wherein the positioning mechanism comprises:
a positioning groove (76; 250) disposed on one of the base member (26; 226) and the movable member (27; 227); and
a positioning projection (50; 276) disposed on the other one of the base member (26; 226) and the movable member (27; 227).

29. The apparatus according to one of the preceding claims wherein the movable member comprises a mounting arm (440).

30. The apparatus according to claim 29 wherein the mounting arm (440) pivots relative to the base member (404).

31. The apparatus according to claim 29 or 30 wherein the mounting arm (440) includes a first latch (450) for latching the mounting arm (440) in a first position relative to the base member (404).

32. The apparatus according to claim 31 wherein the mounting arm (440) includes a second latch (453) for latching the mounting arm (440) in a second position relative to the base member (404).

33. The apparatus according to one of claims 29 to 32 wherein the mounting arm (440) is coupled to the base member (404) through a pivot shaft (416).

34. The apparatus according to claim 33 wherein the signal element mounting location (446) is radially spaced apart from the pivot shaft (416).

35. The apparatus according to claim 31 or one of claims 32 to 34 in connection with claim 31 wherein the first latch (450) extends from a first side of the mounting arm (440).

36. The apparatus according to claim 35 in connection with claim 32 wherein the second latch (453) extends from an opposite second side of the mounting arm (440).

37. The apparatus according to claim 36 wherein the first latch (450) and the second latch (453) are disposed in close proximity to the signal element mounting location (446).

38. The apparatus according to one of claims 29 to 37 wherein the mounting arm (440) pivots approximately 180° relative to the base member (404).

39. The apparatus according to one of the preceding claims further comprising a signal element moving mechanism for moving the signal element (22; 222; 480) relative to the movable member (27; 227; 440).

40. The apparatus according to one of the preceding claims wherein the base member (504) comprises:
a movable member mounting boss (516); and
a spoke mounting protuberance (520; 520') coupled to the movable member mounting boss (516).

41. The apparatus according to claim 40 wherein the movable member mounting boss (516) includes a tubular member having a side wall (518).

42. The apparatus according to claim 41 wherein the tubular member has a side wall opening (524) extending through the side wall (518).

43. The apparatus according to claim 42 wherein the side wall opening (524) is a side wall slot extending in a circumferential direction of the tubular member.

44. The apparatus according to one of the claims 40 to 43 wherein the spoke mounting protuberance (520; 520') extends from a side wall (518) of the movable member mounting boss (516).

45. The apparatus according to one of claims 40 to 44 wherein the spoke mounting protuberance (520: 520') includes a protuberance slot (534) for receiving a spoke (6A) therein.

46. The apparatus according to claim 45 wherein the protuberance slot (534) extends completely through the spoke mounting protuberance (520; 520').

47. The apparatus according to claim 45 or 46 in connection with claim 42 wherein the tubular member communicates with the protuberance slot (534).

48. The apparatus according to claim 43 or one of claims 44 to 47 in connection with claims 43 and 45 wherein the side wall slot (524) is oriented the same as the protuberance slot (534).

49. The apparatus according to one of claims 41 to 48 wherein the movable member (508) is adapted to be fitted within the tubular member.

50. The apparatus according to claim 49 wherein the movable member (508) includes a plurality of positioning grooves (564) on an outer peripheral surface thereof.

51. The apparatus according to one of claims 40 to 50 wherein the spoke mounting protuberance (520) includes a threaded inner peripheral surface (540).

52. The apparatus according to claim 51 further comprising a mounting screw (546) engaging the threaded inner peripheral surface (540).

53. The apparatus according to one of claims 40 to 52 further comprising a support ring (548; 616) surrounding the spoke mounting protuberance (520; 520').

54. The apparatus according to claim 45 or one of claims 46 to 53 in connection with claim 45 further comprising a spoke pressing member (604) adapted to be fitted within the protuberance slot (534).

55. The apparatus according to claim 54 in connection with the features of claim 42 wherein the spoke mounting protuberance (520') includes a threaded outer peripheral surface (608), and further comprising a nut (613) for causing the spoke pressing member (604) to be moved toward the side wall opening (524).

56. The apparatus according to claim 55 wherein the nut (613) has an end wall (624) for pressing against an end of the spoke pressing member (604).

57. The apparatus according to one of claims 54 to 56 in connection with claim 53 wherein the support ring (616) is coupled for movement with the spoke pressing member (604).

58. The apparatus according to one of claims 55 to 57 in connection with claim 53 wherein the nut (613) is structured for pressing against the support ring (616).

## Patentansprüche

1. Vorrichtung zum Montieren eines Signalelementes (22; 222; 480; 512) an einem Fahrradlaufrad (6), aufweisend:
das Signalelement (22; 222; 480; 512), ein Basiselement (26; 226; 404; 504) zum Montieren am Laufrad (6),
ein bewegliches Element (27; 227; 440; 508), das mit dem Basiselement (26; 226; 404; 504) für eine Bewegung relativ zum Basiselement (26; 226; 404; 504) verbunden ist, wobei das bewegliche Element (27; 227; 440; 508) ein Signalelement-Befestigungselement (60; 289; 446; 562) beinhaltet, um das Signalelement (22; 222; 480; 512) am beweglichen Element (27; 227; 440; 508) zu montieren,
**dadurch gekennzeichnet, dass** das Signalelement (22; 222; 480; 512) ein Magnet ist.

2. Vorrichtung nach Anspruch 1, bei der das Basiselement (26; 226) einen ersten Speichenbefestigungsabschnitt (30; 230) zum Montieren an einer ersten Speiche (6A) beinhaltet.

3. Vorrichtung nach Anspruch 2, bei welcher der erste Speichenbefestigungsabschnitt (30; 230) eine Speichenbefestigungsnut (32; 232) beinhaltet, welche die erste Speiche (6A) aufnimmt.

4. Vorrichtung nach Anspruch 2, bei welcher der erste Speichenbefestigungsabschnitt (32; 232) einen länglichen Schlitz beinhaltet.

5. Vorrichtung nach Anspruch 2, bei der das Basiselement (226) einen zweiten Speichenbefestigungsabschnitt (234) zum Montieren einer zweiten Speiche (6B) beinhaltet, wobei der erste Speichenbefestigungsabschnitt (230) eine Speichenbefestigungsnut (232) beinhaltet, die die erste Speiche (6A) aufnimmt; und wobei der zweite Speichenbefestigungsabschnitt (234) einen länglichen Schlitz (242) beinhaltet.

6. Vorrichtung nach Anspruch 5, bei der der längliche Schlitz (242) sich zumindest teilweise in einer Richtung senkrecht zur Speichenbefestigungsnut (232) erstreckt.

7. Vorrichtung nach einem der vorhergehenden Ansprüche, bei der das bewegliche Element (27; 227; 440) für eine Rotation relativ zum Basiselement (26; 226; 404) verbunden ist.

8. Vorrichtung nach Anspruch 7, bei der eines von dem Basiselement (26; 226) und dem beweglichen Element (27; 227) eine Positioniernut (76; 250) beinhaltet, und bei der das jeweils andere von dem Basiselement (26; 226) und dem beweglichen Element (27; 227) einen Positioniervorsprung (50; 276) beinhaltet, der mit der Positioniernut (76; 250) in Eingriff kommt, um das bewegliche Element (27; 227) in einer vorbestimmten Position relativ zum Basiselement (26; 226) festzulegen.

9. Vorrichtung nach Anspruch 7 oder 8, bei der das Basiselement (26; 226) eine Befestigungsöffnung (38; 238) beinhaltet, und bei der das bewegliche Element (27; 227) in der Befestigungsöffnung (38; 238) drehbar montiert ist.

10. Vorrichtung nach Anspruch 9, bei der die Befestigungsöffnung (38; 238) eine im Wesentlichen kreisartige Form hat.

11. Vorrichtung nach einem der vorhergehenden Ansprüche, bei welcher der Signalelement-Befestigungsort (60; 289; 446) gegen eine Rotationsachse (R) des beweglichen Elementes (27; 227; 440) versetzt ist.

12. Vorrichtung nach einem der vorhergehenden Ansprüche, bei der das bewegliche Element (27; 227) einen Greifvorsprung (68, 268) beinhaltet.

13. Vorrichtung nach einem der vorhergehenden Ansprüche, die eine Rückhalteeinrichtung (28) beinhaltet, die das bewegliche Element (27) mit dem Basiselement (26) verbindet.

14. Vorrichtung nach Anspruch 13, bei der das bewegliche Element (27) zwischen der Rückhalteeinrichtung (28) und dem Basiselement (26) angeordnet ist.

15. Vorrichtung nach Anspruch 13 oder 14, bei der die Rückhalteeinrichtung (28) ein plattenförmiges Element ist.

16. Vorrichtung nach einem der Ansprüche 13 bis 15, bei der die Rückhalteeinrichtung (28) eine Rückhalteeinrichtungsöffnung (80) aufweist, um einen Abschnitt des beweglichen Elementes (27) freizulegen.

17. Vorrichtung nach Anspruch 16 in Verbindung mit Anspruch 12, wobei der Greifvorsprung (68) in der Rückhalteeinrichtungsöffnung (80) angeordnet ist.

18. Vorrichtung nach Anspruch 16 oder 17, bei der die Rückhalteeinrichtungsöffnung (80) eine kreisartige Form aufweist, und bei der das bewegliche Element (27) eine kreisartige Form aufweist, die in der Rückhalteeinrichtungsöffnung (80) rotiert.

19. Vorrichtung nach einem der vorhergehenden Ansprüche, welche weiter einen ersten Reflektor (212) aufweist, der mit einer ersten Seite des beweglichen Elementes (227) verbunden ist.

20. Vorrichtung nach Anspruch 19, welche weiter einen zweiten Reflektor (214) aufweist, der mit einer entgegengesetzten zweiten Seite des beweglichen Elementes (227) verbunden ist.

21. Vorrichtung nach einem der vorhergehenden Ansprüche, bei der das Basiselement (26; 226) eine Befestigungsöffnung (38; 238) beinhaltet, und bei der das bewegliche Element (27; 227) in der Befestigungsöffnung (38; 238) angeordnet ist.

22. Vorrichtung nach Anspruch 21, bei der das bewegliche Element (26; 226) sich durch die Befestigungsöffnung (38; 238) hindurch erstreckt.

23. Vorrichtung nach einem der vorhergehenden Ansprüche, bei der das bewegliche Element (27; 227) ein ringförmiges Element (64; 264) aufweist.

24. Vorrichtung nach Anspruch 23 in Verbindung mit Anspruch 12, bei der der Greifvorsprung (68; 268) sich von einer Innenumfangsfläche des ringförmigen Elementes (64; 264) erstreckt.

25. Vorrichtung nach einem der Ansprüche 21 bis 24, bei der das bewegliche Element (227) ein Rückhalteeinrichtungselement (277) beinhaltet, welches das bewegliche Element (227) in der Befestigungsöffnung (238) zurückhält.

26. Vorrichtung nach einem der vorhergehenden Ansprüche, welche weiter einen Positioniermechanismus aufweist, der das bewegliche Element (27; 227; 440) relativ zum Basiselement (26; 226; 404) positioniert.

27. Vorrichtung nach Anspruch 26, bei welcher der Positioniermechanismus das bewegliche Element (27; 227; 440) in einer von einer vorbestimmten Mehrzahl von Positionen relativ zum Basiselement (26; 226; 440) festlegt.

28. Vorrichtung nach Anspruch 26 oder 27, bei der der Positioniermechanismus aufweist:
eine Positioniernut (76; 250), die auf einem von dem Basiselement (26; 226) und dem beweglichen Element (27; 227) angeordnet ist; und
einen Positioniervorsprung (50; 276), der auf dem jeweils anderen von dem Basiselement (26; 226) und dem beweglichen Element (27; 227) angeordnet ist.

29. Vorrichtung nach einem der vorhergehenden Ansprüche, bei der das bewegliche Element einen Befestigungsarm (440) aufweist.

30. Vorrichtung nach Anspruch 29, bei welcher der Befestigungsarm (440) relativ zum Basiselement (404) schwenkt.

31. Vorrichtung nach Anspruch 29 oder 30, bei welcher der Befestigungsarm (440) eine erste Klinke (450) aufweist, um den Befestigungsarm (440) in einer ersten Position relativ zum Basiselement (404) einzurasten.

32. Vorrichtung nach Anspruch 31, bei welcher der Befestigungsarm (440) eine zweite Klinke (453) beinhaltet, um den Befestigungsarm (440) in einer zweiten Position relativ zum Basiselement (404) einzurasten.

33. Vorrichtung nach einem der Ansprüche 29 bis 32, bei welcher der Befestigungsarm (440) mit dem Basiselement (404) über einen Schwenkzapfen (416) verbunden ist.

34. Vorrichtung nach Anspruch 33, bei der der Signalelement-Befestigungsort (446) radial beabstandet von der Schwenkachse (416) ist.

35. Vorrichtung nach Anspruch 31 oder einem der Ansprüche 32 bis 34 in Verbindung mit Anspruch 31, bei welcher die erste Klinke (450) sich von einer ersten Seite des Befestigungsarms (440) erstreckt.

36. Vorrichtung nach Anspruch 35 in Verbindung mit Anspruch 32, bei welcher die zweite Klinke (453) sich von einer entgegengesetzten zweiten Seite des Befestigungsarms (440) erstreckt.

37. Vorrichtung nach Anspruch 36, bei der die erste Klinke (450) und die zweite Klinke (453) in unmittelbarer Nähe zum Signalelement-Befestigungsort (446) angeordnet sind.

38. Vorrichtung nach einem der Ansprüche 29 bis 37, bei welcher der Befestigungsarm (440) ungefähr 180° relativ zum Basiselement (404) schwenkt.

39. Vorrichtung nach einem der vorhergehenden Ansprüche, die weiter einen Signalelement-Bewegungsmechanismus aufweist, der das Signalelement (22; 222; 480) relativ zum beweglichen Element (27; 227; 440) bewegt.

40. Vorrichtung nach einem der vorhergehenden Ansprüche, bei der das Basiselement (504) aufweist:
eine Befestigungsbosse (516) des beweglichen Elementes; und
einen Speichenbefestigungsvorsprung (520; 520'), der mit der Befestigungsbosse (516) des beweglichen Elementes verbunden ist.

41. Vorrichtung nach Anspruch 40, welcher die Befestigungsbosse (516) des beweglichen Elementes ein rohrförmiges Element mit einer Seitenwand (518) beinhaltet.

42. Vorrichtung nach Anspruch 41, bei der das rohrförmige Element eine Seitenwandöffnung (524) aufweist, die sich durch die Seitenwand (518) hindurch erstreckt.

43. Vorrichtung nach Anspruch 42, bei der die Seitenwandöffnung (524) ein Seitenwandschlitz ist, der sich in Umfangsrichtung des rohrförmigen Elementes erstreckt.

44. Vorrichtung nach einem der Ansprüche 40 bis 43, bei welcher der Speichenbefestigungsvorsprung (520; 520') sich von einer Seitenwand (518) der Befestigungsbosse (516) des beweglichen Elements erstreckt.

45. Vorrichtung nach einem der Ansprüche 40 bis 44, bei welcher der Speichenbefestigungsvorsprung (520; 520') einen Vorsprungsschlitz (534) beinhaltet, der eine Speiche (6A) aufnimmt.

46. Vorrichtung nach Anspruch 45, bei welcher der Vorsprungsschlitz (534) sich vollständig durch den Speichenbefestigungsvorsprung (520; 520') hindurch erstreckt.

47. Vorrichtung nach Anspruch 45 oder 46 in Verbindung mit Anspruch 42, bei der das rohrförmige Element mit dem Vorsprungsschlitz (534) in Verbindung steht.

48. Vorrichtung nach Anspruch 43 oder einem der Ansprüche 44 bis 47 in Verbindung mit Ansprüchen 43 und 45, bei welcher der Seitenwandschlitz (524) genauso wie der Vorsprungsschlitz (534) orientiert ist.

49. Vorrichtung nach einem der Ansprüche 41 bis 48, bei der das bewegliche Element (508) ausgebildet ist, um in das rohrförmige Element eingesetzt zu werden.

50. Vorrichtung nach Anspruch 49, bei der das bewegliche Element (508) eine Mehrzahl von Positioniernuten (564) an seiner Außenumfangsfläche beinhaltet.

51. Vorrichtung nach einem der Ansprüche 40 bis 50, bei welcher der Speichenbefestigungsvorsprung (520) eine mit einem Gewinde versehene Innenumfangsfläche (540) aufweist.

52. Vorrichtung nach Anspruch 51, die weiter eine Befestigungsschraube (546) aufweist, die mit der mit einem Gewinde versehenen Innenumfangsfläche (540) in Eingriff kommt.

53. Vorrichtung nach einem der Ansprüche 40 bis 52, die weiter einen Trägerring (548; 616) aufweist, der den Speichenbefestigungsvorsprung (520; 520') umgibt.

54. Vorrichtung nach Anspruch 45 oder einem der Ansprüche 46 bis 53 in Verbindung mit Anspruch 45, welche weiter ein Speichendrückelement (604) aufweist, das ausgebildet ist, um in den Vorsprungsschlitz (534) eingesetzt zu werden.

55. Vorrichtung nach Anspruch 54 in Verbindung mit den Merkmalen von Anspruch 42, bei welcher der Speichenbefestigungsvorsprung (520') eine mit einem Gewinde versehene Außenumfangsfläche (608) beinhaltet, und weiter eine Mutter (613) aufweist, die bewirkt, dass das Speichendrückelement (604) zur Seitenwandöffnung (524) hin bewegt wird.

56. Vorrichtung nach Anspruch 55, bei der die Mutter (613) eine Stirnwand (624) aufweist, die gegen ein Ende des Speichendrückelementes (604) drückt.

57. Vorrichtung nach einem der Ansprüche 54 bis 56 in Verbindung mit Anspruch 53, bei welcher der Tragring (616) für eine Bewegung mit dem Speichendrückelement (604) verbunden ist.

58. Vorrichtung nach einem der Ansprüche 55 bis 57 in Verbindung mit Anspruch 53, bei der die Mutter (613) strukturiert ist, um gegen den Trägerring (616) zu drücken.

## Revendications

1. Appareil pour monter un élément de signal (22 ; 222 ; 480 ; 512) sur une roue (6) de bicyclette, comprenant :
l'élément de signal (22 ; 222 ; 480 ; 512),
un élément de base (26 ; 226 ; 404 ; 504) pour le montage sur la roue (6),
un élément mobile (27 ; 227 ; 440 ; 508) couplé à l'élément de base (26 ; 226 ; 404 ; 504) pour le mouvement par rapport à l'élément de base (26 ; 226 ; 404 ; 504) dans lequel l'élément mobile (27 ; 227 ; 440 ; 508) comprend un élément de montage (60 ; 289 ; 446 ; 562) d'élément de signal pour monter l'élément de signal (22 ; 222 ; 480 ; 512) sur l'élément mobile (27 ; 227 ; 440 ; 508),
**caractérisé en ce que** l'élément de signal (22 ; 222 ; 480 ; 512) est un aimant.

2. Appareil selon la revendication 1, dans lequel l'élément de base (26 ; 226) comprend une première partie de montage de rayon (30 ; 230) pour le montage d'un premier rayon (6A).

3. Appareil selon la revendication 2, dans lequel la première partie de montage de rayon (30 ; 230) comprend une rainure de montage de rayon (32 ; 232) pour recevoir le premier rayon (6A) à l'intérieur de celle-ci.

4. Appareil selon la revendication 2, dans lequel la première partie de montage de rayon (32 ; 232) comprend une fente allongée.

5. Appareil selon la revendication 2, dans lequel l'élément de base (226) comprend une seconde partie de montage de rayon (234) pour le montage d'un second rayon (6B), dans lequel la première partie de montage de rayon (230) comprend une rainure de montage de rayon (232) pour recevoir le premier rayon (6A) à l'intérieur de celle-ci ; et dans lequel la seconde partie de montage de rayon (234) comprend une fente allongée (242).

6. Appareil selon la revendication 5, dans lequel la fente allongée (242) s'étend au moins partiellement dans une direction perpendiculaire à la rainure de montage de rayon (232).

7. Appareil selon l'une quelconque des revendications précédentes, dans lequel l'élément mobile (27 ; 227 ; 440) est couplé pour la rotation par rapport à l'élément de base (26 ; 226 ; 404).

8. Appareil selon la revendication 7, dans lequel l'un parmi l'élément de base (26 ; 226) et l'élément mobile (27 ; 227) comprend une rainure de positionnement (76 ; 250) et dans lequel l'autre parmi l'élément de base (26 ; 226) et l'élément mobile (27 ; 227) comprend une saillie de positionnement (50 ; 276) pour mettre en prise la rainure de positionnement (76 ; 250) pour placer l'élément mobile (27 ; 227) dans une position prédéterminée par rapport à l'élément de base (26 ; 226).

9. Appareil selon la revendication 7 ou 8, dans lequel l'élément de base (26 ; 226) comprend une ouverture de montage (38 ; 238), et dans lequel l'élément mobile (27 ; 227) est monté de manière rotative dans l'ouverture de montage (38 ; 238).

10. Appareil selon la revendication 9, dans lequel l'ouverture de montage (38 ; 238) a une forme sensiblement circulaire.

11. Appareil selon l'une quelconque des revendications précédentes, dans lequel l'emplacement de montage (60 ; 289 ; 446) de l'élément de montage est décalé par rapport à un axe de rotation (R) de l'élément mobile (27 ; 227 ; 440).

12. Appareil selon l'une quelconque des revendications précédentes, dans lequel l'élément mobile (27 227) comprend une saillie de préhension (68 ; 268).

13. Appareil selon l'une quelconque des revendications précédentes, comprenant en outre un dispositif de retenue (28) pour coupler l'élément mobile (27) à l'élément de base (26).

14. Appareil selon la revendication 13, dans lequel l'élément mobile (27) est disposé entre le dispositif de retenue (28) et l'élément de base (26).

15. Appareil selon la revendication 13 ou 14, dans lequel l'élément de retenue (28) est un élément en forme de plaque.

16. Appareil selon l'une des revendications 13 à 15, dans lequel le dispositif de retenue (28) a une ouverture de retenue (80) pour exposer une partie de l'élément mobile (27).

17. Appareil selon la revendication 16 conjointement à la revendication 12, dans lequel la saillie de préhension (68) est disposée dans l'ouverture de retenue (80).

18. Appareil selon la revendication 16 ou 17, dans lequel l'ouverture de retenue (80) a une forme circulaire, et dans lequel l'élément mobile (27) a une forme circulaire qui tourne dans l'ouverture de retenue (80).

19. Appareil selon l'une des revendications précédentes, comprenant en outre un premier réflecteur (212) couplé à un premier côté de l'élément mobile (227).

20. Appareil selon la revendication 19, comprenant en outre un second réflecteur (214) couplé à un second côté opposé de l'élément mobile (227).

21. Appareil selon l'une des revendications précédentes, dans lequel l'élément de base (26 ; 226) comprend une ouverture de montage (38 ; 238), et dans lequel l'élément mobile (27 ; 227) est disposé dans l'ouverture de montage (38 ; 238).

22. Appareil selon la revendication 21, dans lequel l'élément mobile (26 ; 226) s'étend à travers l'ouverture de montage (38 ; 238).

23. Appareil selon l'une des revendications précédentes, dans lequel l'élément mobile (27 ; 227) comprend un élément annulaire (64 ; 264).

24. Appareil selon la revendication 23 conjointement à la revendication 12, dans lequel la saillie de préhension (68 ; 268) s'étend à partir d'une surface périphérique interne de l'élément annulaire (64 ; 264).

25. Appareil selon l'une des revendications 21 à 24 dans lequel l'élément mobile (227) comprend un élément de retenue (277) pour retenir l'élément mobile (227) dans l'ouverture de montage (238).

26. Appareil selon l'une des revendications précédentes, comprenant en outre un mécanisme de positionnement pour positionner l'élément mobile (27 ; 227 ; 440) par rapport à l'élément de base (26 ; 226 ; 404).

27. Appareil selon la revendication 26, dans lequel le mécanisme de positionnement place l'élément mobile (27 ; 227 ; 440) dans l'une d'une pluralité déterminée de positions par rapport à l'élément de base (26 ; 226 ; 440).

28. Appareil selon la revendication 26 ou 27, dans lequel le mécanisme de positionnement comprend :
une rainure de positionnement (76 ; 250) disposée sur l'un parmi l'élément de base (26 ; 226) et l'élément mobile (27 ; 227) ; et
une saillie de positionnement (50 ; 276) disposée sur l'autre parmi l'élément de base (26 ; 226) et l'élément mobile (27 ; 227).

29. Appareil selon l'une des revendications précédentes, dans lequel l'élément mobile comprend un bras de montage (440).

30. Appareil selon la revendication 29, dans lequel le bras de montage (440) pivote par rapport à l'élément de base (404).

31. Appareil selon la revendication 29 ou 30, dans lequel le bras de montage (440) comprend un premier verrouillage (450) pour verrouiller le bras de montage (440) dans une première position par rapport à l'élément de base (404).

32. Appareil selon la revendication 31, dans lequel le bras de montage (440) comprend un second verrouillage (453) pour verrouiller le bras de montage (440) dans une seconde position par rapport à l'élément de base (404).

33. Appareil selon l'une des revendications 29 à 32, dans lequel le bras de montage (440) est couplé à l'élément de base (404) par le biais d'un arbre de pivot (416).

34. Appareil selon la revendication 33, dans lequel l'emplacement de montage (446) de l'élément de signal est radialement espacé de l'arbre de pivot (416).

35. Appareil selon la revendication 31 ou l'une des revendications 32 à 34 conjointement à la revendication 31, dans lequel le premier verrouillage (450) s'étend à partir d'un premier côté du bras de montage (440).

36. Appareil selon la revendication 35 conjointement à la revendication 32, dans lequel le second verrouillage (453) s'étend à partir d'un second côté opposé du bras de montage (440).

37. Appareil selon la revendication 36, dans lequel le premier verrouillage (450) et le second verrouillage (453) sont disposés à proximité immédiate de l'emplacement de montage (446) de l'élément de signal.

38. Appareil selon l'une des revendications 29 à 37, dans lequel le bras de montage (440) pivote approximativement à 180° par rapport à l'élément de base (404).

39. Appareil selon l'une des revendications précédentes, comprenant en outre un mécanisme de déplacement d'élément de signal pour déplacer l'élément de signal (22 ; 222 ; 480) par rapport à l'élément mobile (27 ; 227 ; 440).

40. Appareil selon l'une des revendications précédentes, dans lequel l'élément de base (504) comprend :
une bosse de montage (516) d'élément mobile ; et
une protubérance de montage de rayon (520 ; 520') couplée à la bosse de montage (516) d'élément mobile.

41. Appareil selon la revendication 40, dans lequel la bosse de montage (516) d'élément mobile comprend un élément tubulaire ayant une paroi latérale (518).

42. Appareil selon la revendication 41, dans lequel l'élément tubulaire a une ouverture (524) de paroi latérale s'étendant à travers la paroi latérale (518).

43. Appareil selon la revendication 42, dans lequel l'ouverture (524) de paroi latérale est une fente de paroi latérale s'étendant dans une direction circonférentielle de l'élément tubulaire.

44. Appareil selon l'une des revendications 40 à 43 dans lequel la protubérance de montage de rayon (520 ; 520') s'étend à partir d'une paroi latérale (518) de la bosse de montage (516) d'élément mobile.

45. Appareil selon l'une des revendications 40 à 44, dans lequel la protubérance de montage de rayon (520 ; 520') comprend une fente de protubérance (534) pour recevoir un rayon (6A) à l'intérieur de celle-ci.

46. Appareil selon la revendication 45, dans lequel la fente de protubérance (534) s'étend complètement à travers la protubérance de montage de rayon (520 ; 520').

47. Appareil selon la revendication 45 ou 46 conjointement à la revendication 42, dans lequel l'élément tubulaire communique avec la fente de protubérance (534).

48. Appareil selon la revendication 43 ou l'une des revendications 44 à 47 conjointement aux revendications 43 et 45, dans lequel la fente (524) de paroi latérale est orientée de la même manière que la fente de protubérance (534).

49. Appareil selon l'une des revendications 41 à 48, dans lequel l'élément mobile (508) est adapté pour être monté dans l'élément tubulaire.

50. Appareil selon la revendication 49, dans lequel l'élément mobile (508) comprend une pluralité de rainures de positionnement (564) sur sa surface périphérique externe.

51. Appareil selon l'une des revendications 40 à 50, dans lequel la protubérance de montage de rayon (520) comprend une surface périphérique interne filetée (540).

52. Appareil selon la revendication 51, comprenant en outre une vis de montage (546) mettant en prise la surface périphérique interne filetée (540).

53. Appareil selon l'une des revendications 40 à 52 comprenant en outre une bague de support (548 ; 616) entourant la protubérance de montage de rayon (520 ; 520').

54. Appareil selon la revendication 45 ou l'une des revendications 46 à 53 conjointement à la revendication 45, comprenant en outre un élément de pression de rayon (604) adapté pour être monté dans la fente de protubérance (534).

55. Appareil selon la revendication 54 conjointement aux caractéristiques de la revendication 42, dans lequel la protubérance de montage de rayon (520') comprend une surface périphérique externe filetée (608) et comprenant en outre un écrou (613) pour amener l'élément de pression de rayon (604) à être déplacé vers l'ouverture (524) de paroi latérale.

56. Appareil selon la revendication 55, dans lequel l'écrou (613) a une paroi d'extrémité (624) pour appuyer contre une extrémité de l'élément de pression de rayon (604).

57. Appareil selon l'une des revendications 54 à 56 conjointement à la revendication 53, dans lequel la bague de support (616) est couplée pour le mouvement avec l'élément de pression de rayon (604).

58. Appareil selon l'une des revendications 55 à 57 conjointement à la revendication 53, dans lequel l'écrou (613) est structuré pour appuyer contre la bague de support (616).
